# EUROPÄISCHE PATENTSCHRIFT

(11) **EP 1 440 253 B1**
(45) Veröffentlichungstag und Bekanntmachung des Hinweises auf die Patenterteilung: **05.04.2006**
(21) Anmeldenummer: 02802278.8
(22) Anmeldetag: 30.10.2002
(51) Int. Cl.: F16G 15/12, F16G 13/12

(54) **KETTE, INSBESONDERE HEBEZEUGKETTE**
CHAIN, IN PARTICULAR A HOIST CHAIN
CHAINE, NOTAMMENT CHAINE D'UN ENGIN DE LEVAGE

(30) Priorität: 30.10.2001 DE 10154902; 30.10.2001 DE 10154901
(43) Veröffentlichungstag der Anmeldung: 28.07.2004
(73) Patentinhaber: RUD-Kettenfabrik Rieger & Dietz GmbH u. Co., 73432 Aalen-Unterkochen (DE)
(72) Erfinder: SINZ, Rolf, 73450 Heubach (DE); DALFERTH, Hans, 73433 Aalen (DE); WISTUBA, Uwe, 73432 Aalen (DE); HERZOG, Heribert, 73432 Aalen (DE)
(74) Vertreter: Grünecker, Kinkeldey, Stockmair & Schwanhäusser Anwaltssozietät
(86) Internationale Anmeldenummer: PCT/DE2002/004068
(87) Internationale Veröffentlichungsnummer: WO 2003/038303

(56) Entgegenhaltungen:
- EP-A- 0 816 717
- BE-A- 530 775
- DE-A- 3 929 148
- GB-A- 2 326 145
- US-A- 3 410 085

## Beschreibung

### Technisches Gebiet

Die Erfindung betrifft eine Kette, insbesondere einsatzgehärtete Hebezeugkette mit aus D-Profilstahlabschnitten hergestellten Kettengliedern, die im Bereich des Überganges zwischen ihren Flanken und ihrer äußeren, im Wesentlichen planen Umfangsfläche abgerundet sind.

### Stand der Technik

Aus der EP 0 816 717 A2 ist neben einer Kette aus D-Profilabschnitten, bei denen die äußere Umfangsfläche über scharfe Kanten in die geraden Flanken des jeweiligen Abschnittes übergeht, eine Kette bekannt, bei der die vorgenannten Kanten leicht abgerundet sind, wobei der Radius der Abrundung wie auch bei anderen in der Praxis verwendeten einschlägigen Ketten sehr klein ist, um eine Querschnittsverminderung des Gliedprofils zu vermeiden. Für die Verwendung kleiner Abrundungsradien spricht zudem der Umstand, dass es als besonderer Vorteil von Hebezeugketten mit einen D-Profilquerschnitt aufweisenden Gliedern, erachtet wird, dass zwischen den äußeren Umfangsflächen der Kettenglieder der Kette und den Auflageflächen der die Kette antreibenden und/oder umlenkenden Kettenräder anders als beim Einsatz von Rundstahlketten keine linienförmige, sondern eine flächige Abstützung der Kettenglieder erfolgt, die zu einer der Größe der Stützflächen proportionalen reduzierten Flächenpressung und folglich zu einem verminderten Verschleiß sowohl der Kettenräder als auch der Kettenglieder führt.

### Darstellung der Erfindung

Untersuchungen der Anmelderin haben gezeigt, dass sich der durch Einsatz sogenannter D-Profilglieder und durch den hiermit verbundenen Abbau der Flächenpressung erzielte Fortschritt in Grenzen hält, weil die Dauerfestigkeit einschlägiger Kettenglieder erheblich zu wünschen übrig lässt. Hier Abhilfe zu schaffen, ist das Ziel der Erfindung, ihr liegt folglich die Aufgabe zugrunde, unter Beibehaltung von gegenüber den Auflageverhältnissen von Rundstahlketten verbesserten Auflageverhältnissen zwischen den Kettengliedern von D-Profilketten und den für sie vorgesehenen Kettenrädern die Dauerfestigkeit, d. h. die Schwingfestigkeit der Kettenglieder zu erhöhen. Gelöst wird diese Aufgabe erfindungsgemäß dadurch, dass der Abrundungsradius im Bereich des Übergangs zwischen den Flanken und der äußeren, im Wesentlichen planen Umfangsfläche der Kettenglieder gleich dem 0,2 bis 0,4 fachen Wert des Abstandes zwischen den seitlichen Flanken der Kettenglieder ist.

Durch die erfindungsgemäße Ausbildung der Kette wird deren Schwingfestigkeit und die von dieser abhängige Standzeit der Kette spürbar erhöht, ohne dass eine entsprechende Verschlechterung der Verschleißverhältnisse in Kauf genommen werden muss. Die mit zunehmender Größe der Abrundungsradien verbundene Querschnittsverringerung der Kettenglieder hat sich nicht als nachteilig erweisen, zumal größere Abrundungsradien die Möglichkeit zur Reduzierung der inneren Breite der die Kettenräder passierenden Kettenglieder eröffnen, was sich ebenfalls positiv auf die Standzeit der Kette auswirkt.

In Fällen, in denen sich die Kettenglieder der Kette lediglich über ihre Buge an Stützflächen der Kettenräder abstützen, läßt sich die Schwingfestigkeit der D-Profilglieder noch zusätzlich dadurch erhöhen, daß sie im Bereich ihrer durch die Buge miteinander verbundenen Längsschenkel mit unter Veränderung ihres Ausgangsquerschnittes durch örtliche plastische Verformung erzeugten abgeplatteten Zonen versehen sind. Hierbei tragen nicht nur die partielle Quer schnittsveränderung sondern auch die durch plastische Verformung im Rahmen eines Stauchvorganges erzielte Gefügeverdichtung ergänzend zum erzielten Fortschritt bei.

Weitere Merkmale und Einzelheiten der Erfindung ergeben sich aus den Ansprüchen, der nachstehenden Beschreibung und der beigefügten Zeichnung.

### Kurze Beschreibung der Zeichnungen

Es zeigen:
- Figur 1: einen Schnitt durch zwei um 45° zueinander abgewinkelte Kettenglieder einer aus D-Profilstahlabschnitten hergestellten Kette, bei der die D-Profilstahlabschnitte im Bereich des Übergangs zwischen dem äußeren Umfang und den Flanken der Glieder nicht abgerundet sind,
- Figur 2: einen Schnitt durch zwei um 45° zueinander abgewinkelte Kettenglieder, deren D-Profil im Bereich des Übergangs zwischen dem äußeren Umfang und den Flanken jeweils einen Abrundungsradius aufweist, der gleich dem 0,2 fachen Abstand zwischen den Flanken der Glieder ist und
- Figur 3: einen Schnitt durch zwei um 45° zueinander abgewinkelte Kettenglieder, deren D-Profil im Bereich des Übergangs zwischen dem äußeren Umfang und den Flanken jeweils einen Abrundungsradius aufweist, der gleich dem 0,4 fachen Abstand zwischen den Flanken der Glieder ist,
- Figur 4: einen kurzen Kettenstrangabschnitt mit aus D-Profilstahlabschnitten hergestellten Kettengliedern, die außerhalb ihrer Bugbereiche plastisch verformt wurden,
- Figur 5: die Seitenansicht des ersten, in Figur 4 links dargestellten Kettengliedes,
- Figur 6: einen Schnitt längs der Linie VI - VI in Figur 5,
- Figur 7: einen Schnitt längs der Linie VII - VII in Figur 5,
- Figur 8: das zweite Kettenglied des Kettenstrangabschnittes gemäß Figur 4,
- Figur 9: einen Schnitt längs der Linie IX - IX in Figur 8 und
- Figur 10: einen Schnitt längs der Linie X - X in Figur 8.

### Wege zur Ausführung der Erfindung

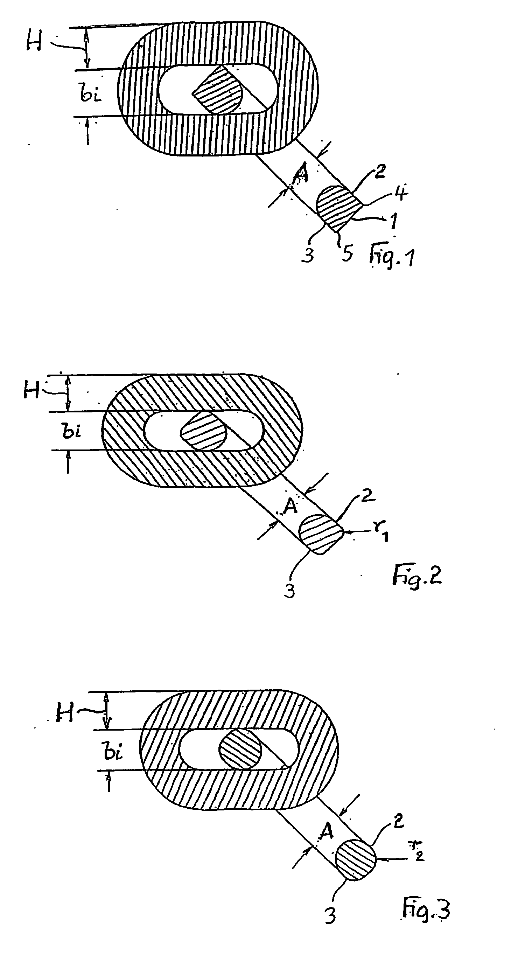

In Figur 1 sind zwei aus D-Profilabschnitten durch Biegen und Schweißen hergestellte, einsatzgehärtete Kettenglieder dargestellt, bei denen die äußere Umfangsfläche 1 der Kettenglieder und deren Flanken 2, 3 jeweils unter Bildung rechteckiger Kanten 4, 5 ineinander übergehen. Man erkennt, dass die innere Breite bi dieser zum Stand der Technik gehörenden Kettenglieder größer sein muss als die innere Breite bi der in den Figuren 2 und 3 dargestellten Kettenglieder, die an den Übergängen zwischen ihren Flanken 2, 3 und der äußeren Umfangsfläche 1 Radien r₁ und r₂ aufweisen, von denen der Radius r₁ dem 0,2 fachen und der Radius r₂ dem 0,4 fachen Wert des Abstandes A zwischen den Flanken 2, 3 der Glieder ist, wobei der Wert A im dargestellten Fall gleich der Höhe H des D-Profilquerschnittes im Bereich der durch die Mitten beider Längsschenkel des jeweiligen Gliedes verlaufenden Ebene ist.

Untersuchungen haben gezeigt, dass die zwischen den jeweiligen Radien r₁ bzw. r₂ verbleibenden planen Umfangs- und Flankenflächen ausreichend groß sind, um die zwischen den Kettengliedern und den zu ihrem Antrieb und ihrer Führung dienenden Kettenrädern wirksamen Flächenpressungen in verschleißhemmenden Grenzen zu halten.

Die erzielbare Schwingfestigkeit der Ketten mit Gliedern gemäß den Figuren 2 und 3 steht dabei anders als die Schwingfiestigkeit von Ketten aus D-Profilstahlabschnitten nach dem Stand der Technik mit nicht oder nur minimal abgerundeten Kanten der Schwingfestigkeit üblicher Rundstahlketten in keiner Weise nach.

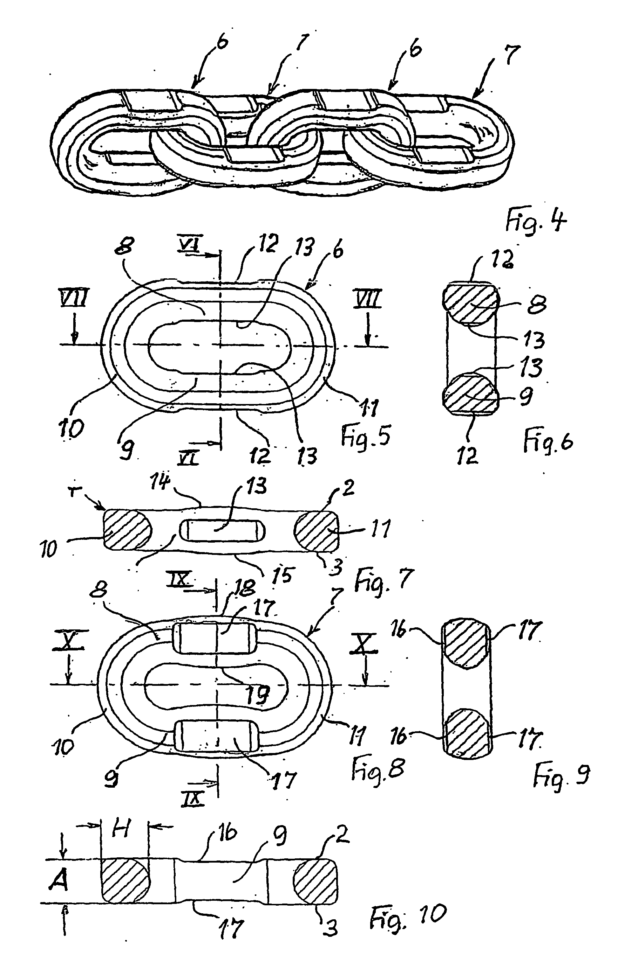

Das in Figur 4 dargestellte kurze aus vier Kettengliedern bestehende Kettenstück weist unterschiedliche Kettenglieder 6 und 7 auf. Bei dem in den Figuren 5 bis 7 dargestellten Kettenglied 6 sind die Längsschenkel 8 und 9, welche durch Buge 10 und 11 miteinander verbunden sind, an sich gegenüberliegenden Seiten mit durch plastische Verformung erzeugten, abgeplatteten Zonen 12 und 13 versehen, welche an sich gegenüberliegenden Seiten der Längsschenkel 8, 9 im Wesentlichen senkrecht zu einer durch die Mitten beider Längsschenkel 8, 9 verlaufenden Ebene orientiert sind. Die plastische Verformung führt zu einer Materialverdichtung und Materialverschiebung im Bereich des Querschnittes der Längsschenkel 8 und 9, wie dies an den Ausbauchungen 14 und 15 in Figur 7 zu erkennen ist. Bei Verwendung eines Kettenstranges der in Figur 4 dargestellten Art würde man die Glieder 6 so anordnen, dass sie das jeweilige Taschenkettenrad als Horizontalglieder passieren, während die Glieder 7 Vertikalglieder bilden würden.

Bei den Gliedern 7 gemäß Figur 8 bis 10 sind die Längsschenkel 8 und 9 an ihren sich jeweils gegenüberliegenden Seiten mit abgeplatteten Zonen 16 und 17 versehen, die parallel zu einer durch die Mitten beider Längsschenkel 8 und 9 verlaufenden Ebene orientiert sind. Auch bei den Gliedern gemäß den Figuren 8 bis 10 kommt es im Bereich der Längsschenkel 8 und 9 zu einer Gefügeverdichtung und Materialverschiebung, die in diesem Fall zu Ausbauchungen 18 und 19 im Bereich der Längsschenkel 8 und 9 führt.

Sowohl bei den Gliedern 6 als auch bei den Gliedern 7 ist dafür Sorge zu tragen, daß der D-Profilquerschnitt im Bereich seines äußeren Umfanges einen Abrundungsradius r aufweist, der gleich dem 0,2 bis 0,4 fachen Wert des Abstandes A zwischen den Flanken der Kettenglieder im Bereich ihrer Buge ist.

## Patentansprüche

1. Kette, insbesondere einsatzgehärtete Hebezeugkette mit aus D-Profilstahlabschnitten hergestellten Kettengliedem, die im Bereich des Übergangs zwischen ihren Flanken und ihrer äußeren, im Wesentlichen planen Umfangsfläche abgerundet sind, **dadurch gekennzeichnet, dass** der Abrundungsradius (r₁, r₂) gleich dem 0,2 bis 0,4 fachen Wert des Abstandes (A) zwischen den Flanken (2,3) der Kettenglieder ist.

2. Kette nach Anspruch 1, **dadurch gekennzeichnet, dass** die Höhe (H) des D-Profilquerschnitts im Bereich einer durch die Mitten beider Längsschenkel der Kettenglieder verlaufenden Ebenen mindestens gleich dem Abstand (A) zwischen den Flanken (2, 3) der Kettenglieder ist.

3. Kette nach Anspruch 1, **dadurch gekennzeichnet, dass** die Kettenglieder (6, 7) im Bereich ihrer durch Buge (10, 11) verbundenen Längsschenkel (8, 9) mit unter Veränderung ihres Ausgangsquerschnittes durch örtliche plastische Verformung erzeugten abgeplatteten Zonen (12, 13; 16, 17) versehen sind.

4. Ketten nach Anspruch 3, **dadurch gekennzeichnet, dass** die Längsschenkel (8, 9) eines jeden zweiten Kettengliedes (6) an sich gegenüberliegenden Seiten jeweils eine im Wesentlichen senkrecht zu einer durch die Mitten beider Längsschenkel (8, 9) verlaufenden Ebene orientierte abgeplattete Zone (12 bzw. 13) aufweisen.

5. Kette nach Anspruch 3 oder 4, **dadurch gekennzeichnet, dass** die Längsschenkel (8, 9) eines jeden zweiten Kettengliedes (7) an sich gegenüberliegenden Seiten jeweils ein im Wesentlichen parallel zu einer durch die Mitten beider Längsschenkel (8, 9) verlaufenden Ebene orientierte abgeplattete Zone (16 bzw. 17) aufweisen.

6. Kette nach einem der Ansprüche 3 bis 5, **dadurch gekennzeichnet, dass** die Kettenglieder (6, 7) einen Ausgangsquerschnitt haben, dessen maximale Höhe (H) im Bereich der Buge (10, 11) mindestens gleich dem Abstand (A) zwischen den Flanken (2, 3) der Buge ist.

## Claims

1. A chain, in particular case-hardened hoist chain, having chain links which are produced from D-profile steel sections and are rounded in the region of the transition between their flanks and their outer, essentially flat circumferential surface, **characterized in that** the rounding radius (r₁, r₂) is equal to 0.2 to 0.4 times the value of the distance (A) between the flanks (2, 3) of the chain links.

2. The chain as claimed in claim 1, **characterized in that** the height (H) of the D-profile cross section in the region of a planes running through the centers of the two longitudinal limbs of the chain links is at least equal to the distance (A) between the flanks (2, 3) of the chain links.

3. The chain as claimed in claim 1, **characterized in that** the chain links (6, 7) are provided in the region of their longitudinal limbs (8, 9), which are connected by rounded ends (10, 11), with flattened zones (12, 13; 16, 17) which are produced by changing the initial cross section of said limbs by means of local, plastic deformation.

4. The chains as claimed in claim 3, **characterized in that** the longitudinal limbs (8, 9) of every second chain link (6) have, on opposite sides, a respective flattened zone (12 and 13) oriented essentially perpendicular to a plane running through the centers of the two longitudinal limbs (8, 9).

5. The chain as claimed in claim 3 or 4, **characterized in that** the longitudinal limbs (8, 9) of every second chain link (7) have, on opposite sides, a respective flattened zone (16 and 17) oriented essentially parallel to a plane running through the centers of the two longitudinal limbs (8, 9).

6. The chain as claimed in one of claims 3 to 5, **characterized in that** the chain links (6, 7) have an initial cross section, the maximum height (H) of which in the region of the rounded ends (10, 11) is at least equal to the distance (A) between the flanks (2, 3) of the rounded ends.

## Revendications

1. Chaîne, en particulier une chaîne cémentée de levage comprenant des maillons fabriqués de tronçons d'acier profilé en D qui sont arrondis au niveau de la jonction entre leurs flancs et leur surface périphérique extérieure essentiellement plane,
**caractérisée en ce que** le rayon d'arrondi (r₁, r₂) est égal à 0,2 à 0,4 fois la valeur de la distance (A) entre les flancs (2, 3) des maillons.

2. Chaîne selon la revendication 1, **caractérisée en ce que** la hauteur (H) de la section t ransversale du profilé en D, au niveau d'un plan passant par les centres des deux branches longitudinales des maillons, est au moins égale à la distance (A) entre les flancs (2, 3) des maillons.

3. Chaîne selon la revendication 1, **caractérisée en ce que** les maillons (6, 7) sont pourvus, au niveau de leurs branches longitudinales (8, 9) reliées l'une à l'autre par les parties frontales (10, 11), de zones aplaties (12, 13; 16, 17) générées par déformation plastique locale accompagnée d'une modification de 1 eur section transversale initiale.

4. Chaîne selon la revendication 3, **caractérisée en ce que** les branches longitudinales (8, 9) de chaque deuxième maillon (6) comportent, sur des côtés opposés, respectivement une zone aplatie plane (12 ou 13) orientée essentiellement perpendiculairement à un plan passant par les centres des deux branches longitudinales (8, 9).

5. Chaîne selon la revendication 3 ou 4,
**caractérisée en ce que** les branches longitudinales (8, 9) de chaque deuxième maillon (7) comportent, su r des côtés opposés, respectivement une zone aplatie plane (16 ou 17) orientée essentiellement parallèlement à un plan passant par les centres des deux branches longitudinales (8, 9).

6. Chaîne selon l'une des revendications 3 à 5,
**caractérisée en ce que** les maillons (6, 7) présentent une section transversale initiale dont la hauteur maximale (H), au niveau des parties frontales (10, 11) est au moins égale à la distance (A) entre les flancs (2, 3) des parties frontales.
